(19) Europäisches Patentamt
European Patent Office
Office européen des brevets

(11) **EP 3 234 326 B1**

(12) **FASCICULE DE BREVET EUROPEEN**

(45) Date de publication et mention de la délivrance du brevet:
**06.07.2022 Bulletin 2022/27**

(21) Numéro de dépôt: **15820221.8**

(22) Date de dépôt: **11.12.2015**

(51) Classification Internationale des Brevets (IPC):
**F02D 41/18** *(2006.01)* **F02M 26/49** *(2016.01)*
**F02D 21/08** *(2006.01)*

(52) Classification Coopérative des Brevets (CPC):
**F02D 41/18; F02D 41/0052; F02M 26/49;**
F02M 26/06; Y02T 10/40

(86) Numéro de dépôt international:
**PCT/FR2015/053433**

(87) Numéro de publication internationale:
**WO 2016/092225 (16.06.2016 Gazette 2016/24)**

(54) **PROCÉDÉ DE DIAGNOSTIC D'UN SYSTÈME DE RECIRCULATION PARTIELLE DES GAZ D'ÉCHAPPEMENT DE MOTEUR AUTOMOBILE**

DIAGNOSEVERFAHREN FÜR EIN ABGASRÜCKFÜHRSYSTEM EINES KRAFTFAHRZEUGMOTORS

DIAGNOSTIC METHOD OF AN EXHAUST GAS RECIRCULATION SYSTEM OF AN AUTOMOBILE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2014 FR 1462295**

(43) Date de publication de la demande:
**25.10.2017 Bulletin 2017/43**

(73) Titulaire: **Renault s.a.s**
**92100 Boulogne Billancourt (FR)**

(72) Inventeur: **MARTIN, Ludovic**
**91140 Villebon sur Yvette (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**WO-A1-02/12703      DE-A1-102005 006 362**
**US-A1- 2012 095 664**

**Description**

L'invention a pour domaine technique le contrôle moteur, et plus particulièrement le contrôle de moteurs munis de circuit de recirculation partielle de gaz d'échappement.

Le contrôle moteur est la technique de gestion d'un moteur à combustion interne avec l'ensemble de ses capteurs et actionneurs. L'ensemble des lois de contrôle commande (stratégies logicielles) et des paramètres de caractérisation (calibrations) d'un moteur sont contenus dans un calculateur appelé unité de contrôle électronique (acronyme UCE).

Un turbocompresseur comprend une turbine entraînant un compresseur apte à comprimer l'air qui entre dans le collecteur d'admission afin d'augmenter la quantité d'air admise dans les cylindres. La turbine est placée à la sortie du collecteur d'échappement et est entraînée par les gaz d'échappement. La puissance fournie par les gaz d'échappement à la turbine est modulée en installant des ailettes (turbo à géométrie variable . TGV) ou en créant un contournement à débit variable de la turbine (wastegate) dans le cas d'un turbocompresseur à géométrie fixe. Le compresseur est monté sur le même axe que la turbine. Un échangeur peut être placé entre le compresseur et le collecteur d'admission pour refroidir l'air à la sortie du compresseur.

Un actionneur est utilisé pour piloter l'ouverture et la fermeture des ailettes ou l'ouverture et la fermeture de la vanne du contournement. Le signal de commande de l'actionneur est fourni par l'UCE et permet d'asservir la pression dans le collecteur d'admission à une consigne de pression de suralimentation calculée par l'UCE. La pression de suralimentation est mesurée via un capteur de pression placé dans le collecteur d'admission.

La quantité d'oxydes d'azote produite par un moteur diesel, est fortement liée à la composition du mélange réactif dans les cylindres du moteur en air, carburant et à la présence de gaz inertes. Ces gaz ne participent pas à la combustion et proviennent d'un circuit dérivant une partie des gaz d'échappement vers le circuit d'admission. Le circuit permet la recirculation partielle des gaz d'échappement (EGR). L'EGR est assuré en mettant en communication le circuit d'échappement et le circuit d'admission via une section de passage dont la dimension est réglée par une vanne EGR. Il existe deux types de circuit EGR :

- Le circuit d'EGR dit haute pression (HP) est interne au circuit de suralimentation. L'entrée du circuit est disposée avant la turbine et la sortie est disposée après le compresseur. Ce circuit EGR est utilisé sur l'ensemble des moteurs répondant aux normes de dépollution.
- Le circuit d'EGR dit basse pression (BP) est externe au circuit de suralimentation. L'entrée du circuit est disposée après le filtre à particules et la sortie est disposée avant le compresseur. Ce circuit EGR est utilisé sur certains moteurs répondant aux futures normes de dépollution.

Le taux d'EGR HP est assuré en mettant en communication le circuit d'échappement avant la turbine et le circuit d'admission après le compresseur via une section de passage dont la dimension est réglée par une vanne EGR HP. Un volet d'admission placée en amont de la vanne EGR HP permet d'augmenter la différence de pression aux bornes du circuit EGR HP et donc d'augmenter le taux d'EGR HP.

Le taux d'EGR BP est assuré en mettant en communication le circuit d'échappement après le filtre à particule et le circuit d'admission avant le compresseur via une section de passage dont la dimension est réglée par une vanne EGR BP. Un volet d'échappement placé dans la ligne d'échappement après le piquage EGR BP permet d'augmenter la différence de pression aux bornes du circuit EGR BP et donc d'augmenter le taux d'EGR BP.

Le taux d'EGR, qu'il soit HP ou BP, se définit comme le ratio entre la quantité d'air frais et la quantité d'EGR. Afin d'optimiser la combustion et donc les émissions polluantes, ce taux est modifié en fonction du point de fonctionnement du moteur. Il apparaît ainsi que le débit d'air qui entre dans le moteur est la somme entre le débit d'air frais et le débit d'EGR.

On a :

$$Qmot = Qegr + Qair \hspace{3cm} (Eq.\ 1)$$

Avec :

Qmot : le débit d'air entrant dans le cylindre,
Qegr : le débit d'EGR et
Qair : le débit d'air frais aspiré.

Du fait de la place disponible dans le compartiment moteur, seul le débit d'air frais est mesurable. Cette mesure s'effectue grâce à un débitmètre disposé sur la ligne d'admission d'air frais en aval du filtre à air et en amont du compresseur, et en amont du point de piquage du circuit de recirculation partielle des gaz d'échappement à basse pression si un tel circuit est présent.

Le débit d'air entrant dans le cylindre Qmot dépend directement des caractéristiques du moteur, notamment de sa cylindrée, c'est donc une valeur connue en fonction de la vitesse de rotation du moteur. Ceci implique que pour faire varier le débit EGR, il suffit de faire varier la consigne Qair. Pour ajuster la quantité d'air frais aspiré, le régulateur agit sur les composants de l'admission d'air, notamment la vanne EGR HP et le volet d'admission pour un système EGR HP ou la vanne EGR BP et volet d'échappement pour un système EGR BP. Ainsi en augmentant le débit EGR, le débit d'air frais diminue et inversement.

La quantité d'EGR est donc contrôlée grâce à une consigne d'air frais Qair et un système de régulation qui assure, grâce à une mesure d'air frais issue du débitmètre que la consigne demandée est bien réalisée. En d'autres termes, on règle indirectement un débit d'EGR, en réglant le débit d'air frais en boucle fermée autour d'une consigne par action sur l'un des actionneurs indiqués (vanne EGR par exemple).

Afin de bien respecter les normes environnementales, il est important que l'EGR fonctionne correctement. Pour s'en assurer, un dispositif de diagnostic est nécessaire.

Le dispositif utilisé actuellement compare le débit EGR réalisé avec sa consigne. Le principe de fonctionnement est le suivant. Lorsque les conditions d'utilisation du moteur le permettent, la différence entre la consigne d'EGR et le débit d'EGR réel est calculée. Si cet écart est supérieur à un seuil après un certain temps passé dans les conditions de diagnostic, alors un défaut est détecté.

Ce mode de détection est très sensible à la qualité de la régulation EGR. Si la régulation n'est pas très fine, mais suffisante pour assurer la dépollution du véhicule, il existe un risque de fausse détection, c'est-à-dire de considérer mauvaise une pièce qui fonctionne correctement. De même, les dispersions de production entre différents véhicules peuvent mettre le diagnostic en défaut. De la même manière, des phénomènes acoustiques peuvent perturber le signal de mesure et ainsi mettre la stratégie en défaut.

Le deuxième point faible de cette stratégie est l'écart nécessaire entre la pièce « bonne » et la pièce « mauvaise ». Cet écart doit être important et n'est plus compatible avec la norme Euro6. En effet les défaillances à diagnostiquer sur la norme Euro6 sont provoquées par des pièces « mauvaises » très proches des pièces « bonnes ». Le diagnostic actuel n'est donc plus assez discriminant pour répondre au besoin.

De l'état de la technique, on connaît également les documents suivants. Le document DE 10 2005 006 362 A1 divulgue un procédé de diagnostic de défaillance d'un système de recirculation partielle des gaz d'échappement d'un moteur à combustion interne de véhicule automobile de type diesel, le moteur à combustion interne étant muni d'un moyen de détermination du débit d'air admis, comprenant les étapes suivantes : lorsque le moteur tourne au ralenti, on calcule un critère intégral de diagnostic fonction de la consigne de débit d'air admis et de la mesure d'air admis, puis on détermine si la valeur du critère intégral de diagnostic est supérieure à un seuil, et on émet un signal de détection de défaut du système de recirculation partielle des gaz d'échappement.

Le document US2010/0051000 divulgue un procédé de diagnostic de dysfonctionnement d'une vanne d'échappement de gaz en comparant la différence de pression dans un conduit d'arrivée d'air à une différence de pression de référence. Cette différence de pression se mesure en déterminant la position d'une vanne de réglage d'arrivée d'air frais dans le moteur.

Une dépression est connue pour être représentative d'un débit entrant, néanmoins on ne mesure pas directement le débit par un débitmètre d'air frais comme dans l'invention, et on ne dispose pas du critère intégral (on compare un écart ponctuel entre mesure et consigne).

Le document US2009/0126707 divulgue aussi un procédé de diagnostic de dysfonctionnement d'un système de recirculation de gaz d'échappement en comparant la quantité d'air frais arrivant au moteur à une valeur prédéterminée, cette quantité étant mesurée par la position d'un papillon des gaz. Dans ce document, on ne mesure pas davantage directement le débit et on ne propose pas le critère de calcul intégral de l'invention.

Le diagnostic de la perméabilité du circuit EGR doit permettre de détecter tout manque d'EGR qui entraîne un dépassement des seuils réglementaires. De plus la réglementation impose un nombre minimal de diagnostics (un diagnostic tous les trois roulages pour la norme Euro 6b applicable en septembre 2014).

Afin de répondre à cette contrainte, le diagnostic doit être capable de se jouer sur une grande zone du champ moteur, y compris durant les transitoires de régime ou de charge. Or lors d'un transitoire, la mesure d'air fluctue du fait du système de régulation : même avec un système fonctionnel, la mesure va osciller autour de sa consigne avec des amplitudes plus ou moins importantes. Ces oscillations ne doivent pas provoquer la détection d'une pièce « mauvaise ».

De plus, le diagnostic doit être robuste aux conditions climatiques, la règlementation imposant de diagnostiquer les systèmes antipollution pour des températures d'air supérieures à moins sept degrés Celsius et jusqu'à une altitude de deux mille cinq cent mètres d'altitude. Or la quantité d'EGR varie en fonction de la température d'air et de l'altitude afin de garantir le fonctionnement optimum du moteur. L'écart entre la consigne d'air et la mesure dans le cas d'une pièce défaillante est donc variable.

Tous ces phénomènes peuvent mettre en défaut le diagnostic instantané du système EGR car celui-ci est très ponctuel. Une des solutions pour augmenter la fiabilité du diagnostic instantané est d'augmenter le temps de stabilisation des conditions. Or cette méthode limite les occurrences de diagnostic et donc le respect de la réglementation.

Les problèmes rencontrés dans les architectures EGR BP sont les mêmes que ceux des architectures EGR HP.

Il existe un besoin pour un procédé de diagnostic satisfaisant les exigences décrites ci-dessus.

L'invention a pour objet un procédé de diagnostic de défaillance d'un système de recirculation partielle des gaz d'échappement d'un moteur à combustion interne de véhicule automobile de type diesel, le moteur à combustion interne étant muni d'un moyen de détermination du débit d'air admis.

Le procédé comprend les étapes suivantes :

on détermine si la consigne d'air admis est stable depuis une période de temps mémorisée,

lorsque tel est le cas, on calcule un critère intégral de diagnostic fonction de la consigne de débit d'air admis et de la mesure d'air admis, puis

on détermine si la valeur du critère intégral de diagnostic est supérieure à un seuil,

si tel est le cas, on émet un signal de détection de défaut du système de recirculation partielle des gaz d'échappement.

La valeur du critère intégral de diagnostic est déterminée comme étant égale à l'intégrale par rapport au temps écoulé de la valeur maximale parmi zéro et la consigne de débit d'air admis moins la mesure de débit d'air admis moins une valeur de bande morte.

Le procédé présente l'avantage d'être applicable indifféremment du type de système de recirculation partielle HP ou BP employé.

Dans certaines zones du champ moteur, il se peut que la régulation d'air soit plus lente sans qu'il n'y ait d'impact sur les émissions polluantes. Le critère intégral présente l'avantage de prendre en compte cette lenteur et donc d'être plus robuste vis-à-vis des fausses détections, c'est-à-dire de déclarer défaillante une pièce fonctionnant correctement. En effet, afin de prendre en compte la précision de la régulation, une bande morte est introduite. Le critère de diagnostic n'est calculé que si l'écart entre la consigne et la mesure dépasse une certaine valeur.

Le critère intégral de diagnostic présente l'avantage de prendre en compte les évolutions de l'écart de boucle de régulation durant la phase de diagnostic, ce que ne permet pas le diagnostic instantané. Il est donc possible d'élargir les conditions de diagnostic sans remettre en cause la fiabilité du diagnostic.

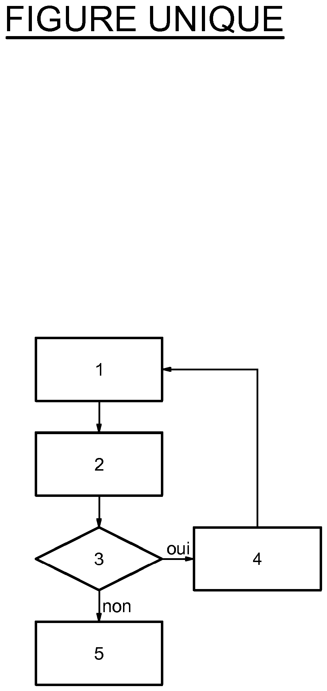

D'autres buts, caractéristiques et avantages de l'invention apparaîtront à la lecture de la description suivante, donnée uniquement à titre d'exemple non limitatif et faite en référence au dessin qui illustre les principales étapes du procédé de diagnostic de défaillance d'un système de recirculation partielle des gaz d'échappement selon l'invention.

Il existe plusieurs façons de procéder au diagnostic d'un système d'EGR, soit de façon instantanée, soit de façon intégrale.

Un diagnostic d'EGR de type instantané requiert une stabilisation des paramètres. Toutefois, durant cette période de stabilisation, l'écart entre la consigne et la mesure peut évoluer. En effet, le point de fonctionnement peut être légèrement modifié durant la période de diagnostic. Ceci peut mener à un diagnostic instantané erroné.

Le diagnostic intégral cumule l'écart entre la consigne et la mesure durant toute la phase de diagnostic. Ce critère ne peut donc qu'augmenter dans le cas d'un composant défectueux : la défaillance est donc détectée même si au moment de la prise de décision l'écart entre la consigne et la mesure est faible.

Le diagnostic intégral apporte donc un avantage en termes de robustesse. Cette robustesse permet d'étendre la zone de diagnostic et donc son occurrence afin de garantir au mieux le bon fonctionnement du système de dépollution et le respect des normes. De plus ce diagnostic n'est pas intrusif, son utilisation n'apporte pas de contraintes supplémentaires.

On va maintenant détailler le critère intégral de diagnostic et la prise de décision qui s'en suit.

Le critère de diagnostic utilisé est l'intégrale de la différence entre la consigne d'air et la mesure. Afin de prendre en compte le temps de réaction du système une bande morte est introduite. Le calcul de l'intégrale n'est différent de zéro que lorsque l'écart entre la consigne et la mesure est supérieur à cette bande morte.

$$critère = \int max((MAF\_SP - MAF) - bande\,morte, 0)\,dt$$

$$(Eq.\ 2)$$

Avec :

MAF SP : Consigne de débit d'air admis
MAF : Mesure de débit d'air admis

L'intégrale est calculée durant un temps défini. Lorsque le temps de calcul est écoulé, la valeur de l'intégrale est comparée à un seuil. Si la valeur de l'intégrale est supérieure au seuil alors un défaut est détecté, sinon l'intégrale est réinitialisée et un nouveau calcul commence tant que les conditions de diagnostic sont satisfaites.

Le procédé de diagnostic correspondant illustré par la figure annexée va maintenant être décrit.

Au cours d'une première étape 1, on vérifie si les conditions de diagnostic sont respectées, notamment que la consigne d'air admis est stable depuis une période de temps mémorisée, par exemple 6s.

Lorsque tel est le cas, le procédé se poursuit au cours d'une deuxième étape 2 au cours de laquelle on calcule le critère intégral de diagnostic par application de l'équation Eq. 2.

Au cours d'une troisième étape 3, on compare la valeur du critère intégral de diagnostic à un seuil. Si la valeur du critère est supérieure à un seuil, le procédé se termine par une étape 5 au cours de laquelle on émet un signal de détection de défaut du système de recirculation partielle des gaz d'échappement.

Si la valeur du critère est inférieure ou égale à un seuil, le procédé se poursuit à l'étape 1.

## Revendications

1. Procédé de diagnostic de défaillance d'un système de recirculation partielle des gaz d'échappement d'un moteur à combustion interne de véhicule automobile de type diesel,
le moteur à combustion interne étant muni d'un moyen de détermination du débit d'air admis, **caractérisé par le fait qu'**il comprend les étapes suivantes :

on détermine si la consigne d'air admis est stable depuis une période de temps mémorisée,
lorsque tel est le cas, on calcule un critère intégral de diagnostic, la valeur du critère intégral étant déterminée comme étant égale à l'intégrale par rapport au temps écoulé de la valeur maximale parmi zéro et la consigne de débit d'air admis moins la mesure de débit d'air admis moins une valeur de bande morte, puis
on détermine si la valeur du critère intégral de diagnostic est supérieure à un seuil,
si tel est le cas, on émet un signal de détection de défaut du système de recirculation partielle des gaz d'échappement.

## Patentansprüche

1. Fehlerdiagnoseverfahren eines Systems zur teilweisen Rückführung der Abgase eines Verbrennungsmotors eines Dieselkraftfahrzeugs,
wobei der Verbrennungsmotor mit einem Mittel zur Bestimmung des Ansaugluftdurchsatzes versehen ist, **dadurch gekennzeichnet, dass** es die folgenden Schritte umfasst:

es wird bestimmt, ob der Ansaugluftsollwert seit einem gespeicherten Zeitraum stabil ist,
wenn dies der Fall ist, wird ein Diagnose-Integralkriterium berechnet, wobei der Wert des Integralkriteriums als gleich dem Integral im Verhältnis zur verstrichenen Zeit des Maximalwerts aus null und dem Ansaugluftdurchsatz-Sollwert minus die Ansaugluftdurchsatz-Messung minus einen Totbandwert bestimmt wird, dann
wird bestimmt, ob der Wert des Diagnose-Integralkriteriums größer als ein Schwellenwert ist, wenn dies der Fall ist, wird ein Fehlerdetektionssignal des Systems zur teilweisen Rückführung der Abgase abgegeben.

## Claims

1. Method for diagnosing the failure of a partial exhaust gas recirculation system of a motor vehicle internal combustion engine of the diesel type,

the internal combustion engine being equipped with a means for determining the air intake flow rate, **characterized in that** it comprises the following steps:

determining whether the air intake setpoint has been stable for a stored time interval,
if this is the case, calculating an integral diagnostic criterion, the value of the integral criterion being determined as being equal to the interval with respect to the time elapsed of the maximum value between zero and the air intake flow rate setpoint, minus the measurement of the air intake flow rate, minus a neutral zone value, and then
determining whether the value of the integral diagnostic criterion is above a threshold, and

if this is the case, sending a detection signal indicating the detection of a fault in the partial exhaust gas recirculation system.

# FIGURE UNIQUE

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102005006362 A1
- US 20100051000 A
- US 20090126707 A